# EUROPÄISCHE PATENTSCHRIFT

(11) **EP 3 468 009 B1**
(45) Veröffentlichungstag und Bekanntmachung des Hinweises auf die Patenterteilung: **19.08.2020**
(21) Anmeldenummer: 17001643.0
(22) Anmeldetag: 06.10.2017
(51) Int. Cl.: H02K 7/06, H02K 7/116, H02K 7/18

(54) **ROTATIONS-HUB-MODUL ZUM ROTATIVEN UND/ODER LINEAREN BEWEGEN EINES ARBEITSELEMENTS**
ROTATION STROKE MODULE FOR THE ROTATION AND/OR LINEAR MOVEMENT OF A WORK ELEMENT
MODULE DE MOUVEMENTS ROTATIFS/VERTICAUX DESTINÉ AUX MOUVEMENTS ROTATIFS ET/OU LINÉAIRES D'UN ÉLÉMENT DE TRAVAIL

(43) Veröffentlichungstag der Anmeldung: 10.04.2019
(73) Patentinhaber: Memotec GmbH & Co. KG, 37327 Leinefelde-Worbis OT Beuren (DE)
(72) Erfinder: PONERT, Lutz, 79206 Breisach a.R. (DE)
(74) Vertreter: Patentanwälte Schuster, Müller & Partner mbB

(56) Entgegenhaltungen:
- US-A- 5 892 309
- US-A1- 2011 298 323
- Michael Firnkes ET AL: "Blog Boosting : Content Marketing Design SEO", , 1. Juni 2015 (2015-06-01), XP055465001, ISBN: 978-3-95845-022-6 Gefunden im Internet: URL:https://www.spn-drive.de/fileadmin/ass ets/Download_Dokumente_SPN/Antriebssysteme /SPN-HSE.pdf [gefunden am 2018-04-04]

## Beschreibung

### Stand der Technik

Die Erfindung geht aus von einem Rotations-Hub-Modul zum Erzeugen von rotativen und/oder linearen Bewegungen für ein Arbeitselement, nach der Gattung des Oberbegriffs des Anspruchs 1.

Rotations-Hub-Module, welche rotatorische und lineare Bewegungen, einerseits unabhängig voneinander, aber auch überlagert erzeugen, haben ihren größten Anwendungsbereich in der Automationstechnik. Insbesondere finden solche Vorrichtungen bei Verschließmaschinen, beispielsweise Schraubverschließern für Getränkebehältnisse, aber auch bei Greifern (pick and place) ihre Anwendung.

Ein bekanntes Rotations-Hub-Modul besteht aus einem Linearmotor, einem Drehmotor, einer Aktuatorwelle und einem Getriebe. Der Drehmotor ist koaxial an den Linearmotor angeflanscht. Der Drehmotor weist einen hohlen Rotor auf, durch welchen die Aktuatorwelle hindurchgeführt ist und welcher mit der Aktuatorwelle kinematisch drehgekoppelt ist. Der Linearmotor weist einen zur Aktuatorwelle koaxial angeordneten Läufer auf, welcher an einem ersten Längsende der Aktuatorwelle mit dieser kinematisch gekoppelt ist in Bezug auf axiale Bewegungen. Ein Untersetzungsgetriebe ist an einem zweiten Längsende der Aktuatorwelle und in axialer Richtung relativ zum Drehmotor bewegbar angeordnet. Das Untersetzungsgetriebe ist antriebsseitig in Bezug sowohl auf axiale als auch auf rotative Bewegungen mit der Aktuatorwelle kinematisch gekoppelt (EP 2 733 830 A1).

Eine ähnliche Ausführung eines Linear-Rotations-Mechanismus besteht aus einem Linearmotor, einem Drehmotor und zwei Führungsschienen. Der Linearmotor besteht aus einem Primärteil (Stator) und einem Sekundärteil (Läufer). Die Führungsschienen sind an ihrem einen Ende über ein Endstück und an dem gegenüberliegenden Ende über ein Kupplungsstück fest miteinander verbunden. Das Primärteil ist zwischen den beiden Führungsschienen auf axial verschiebbaren Schlitten gelagert. Der Sekundärteil, eine zylinderartige Welle, ist in dem Primärteil drehbar und axial verschiebbar angeordnet. An seinen einem Ende ragt das Sekundärteil aus dem Endstück heraus und ist dort drehbar, jedoch axial fest gelagert. An dem anderen Ende ist der Rotor des Drehmotors mittels eines Verbindungsrings mit dem Sekundärteil verbunden. Der Stator des Drehmotors ist fest mit dem Kupplungsstück und somit mit der Führungsschiene verbunden (EP 3 113 342 A1).

Bei einem weiteren Rotations-Hub-Modul ist in einem Gehäuse ein Linearanbaumodul und in axialer Verlängerung zum Linearanbaumodul an das Gehäuse ein Rotationsantrieb angeordnet. Das Linearanbaumodul stellt einen Linearmotor dar, bestehend aus einem Stator, der fest mit dem Gehäuse verbunden ist, und einem Läufer der linear- und drehbeweglich innerhalb des Stators angeordnet ist. Der Läufer weist in seinem Inneren eine Drehmomentenkugelbuchse auf. Eine Welle des Rotationsantriebs überträgt die Drehbewegung in das Gehäuse und verläuft durch das Innere der Drehmomentenkugelbuchse. Die Drehmomentenkugelbuchse sorgt für eine drehfeste Verbindung zwischen der Welle und dem Läufer, jedoch ist der Läufer in seiner Linearbewegung von der Welle entkoppelt. An einer Abtriebswelle, die mit dem Läufer fest verbunden ist, kann somit eine überlagerte rotative und lineare Bewegung abgegriffen werden. Zur linearen Positionierungsgenauigkeit ist ein linearer Lagegeber an der Abtriebswelle angeordnet (EP 2 145 377 B1).

In einer weiteren Veröffentlichung sind zwei Motoren in einem Gehäuse angeordnet. Der erste Motor, der eine Linearbewegung erzeugt, besteht aus einem Primärteil, was einem Stator entspricht, und einem Sekundärteil, was einem Läufer entspricht. Innerhalb des Sekundärteils ist drehfest und linear unbeweglich eine Gewindemutter angeordnet und koaxial durch diese eine Gewindespindel hindurchgeführt. Eine Rotation der Gewindemutter führt zu einer Linearbewegung der Gewindespindel. Der zweite Motor, der eine Drehbewegung erzeugt, besteht ebenfalls aus einem Primärteil (Stator) und einem Sekundärteil (Läufer). Innerhalb des Sekundärteils und fest mit diesem verbunden befindet sich ein Adapterelement, durch das ein fest mit dem Adapterelement verbundenes Arbeitselement hindurchgeführt ist. Da die Gewindespindel und das Arbeitselement fest miteinander verbunden sind, muss jede Bewegung des einen Motors durch den anderen Motor ausgeglichen werden. Die beiden Bewegungsmöglichkeiten sind somit nicht voneinander unabhängig (DE 10 2008 037 707 A1).

In einer anderweitigen Ausführung eines Rotations-Hub-Moduls sind in einem Gehäuse ein Linearmotor mit einer längsverschieblichen Linearwelle, die als Hohlwelle ausgebildet ist, und ein Drehmotor mit einem Rotor axial hintereinander angeordnet. Der Rotor treibt über einen Drehschaft eine Mutter an, die über einen Profilbereich mit einer Ausgangswelle in Drehverbindung steht. Die Ausgangswelle ist durch die Linearwelle hindurchgeführt und über eine Zwischenlagerstruktur in dieser drehbar gelagert. Das dem rotatorischen Antrieb gegenüberliegende Ende der Ausgangswelle ist über ein Arretiergetriebe drehbar aber axial fest mit der Linearwelle verbunden (US 6,362,547 B1).

Ein weiteres Dokument zeigt einen Linear/Rotationsmotor, der einen Linearmotor mit einer Gewindespindel und einen in axialer Verlängerung der Gewindespindel angeordneten Rotationsmotor mit einer mit diesem drehfest verbundenen Ausgangswelle aufweist. Gewindespindel und Ausgangswelle sind über eine Wellenkupplung miteinander verbunden. Der Linearmotor ist von seiner Funktion her auch ein Rotationsmotor, der eine Drehbuchse in Rotation versetzt. Die Gewindespindel ist koaxial durch die Drehbuchse hindurchgeführt und steht mit dieser über das Gewinde in Wirkverbindung, so dass sich bei Rotation der Drehbuchse die Gewindespindel drehend axial in Richtung des Drehmotors bewegt. Das zum Drehmotor weisende Ende der Gewindespindel ist mit der Wellenkupplung verbunden, die eine Trennung der Drehbewegung von Gewindespindel und Ausgangswelle bewirkt. Die Wellenkupplung macht die Axialbewegung der Gewindespindel mit und überträgt diese auf die Antriebswelle (US 6,362,547 B1).

Alle Ausführungsvarianten der zuvor genannten Rotations-Hub-Module haben Probleme bei der gleichzeitigen Ausführung von rotatorischen und linearen Bewegungen im ausgefahrenen Zustand. Diese Probleme sind durch eine unzureichende Führung der Aktuatorwelle bedingt, da die axial wirkenden Kräfte nicht aufgenommen werden können und dadurch das System instabil wird.

Ein Nachteil, der ebenfalls alle vorgenannten Ausführungsformen von Rotations-Hub-Modulen betrifft, liegt darin, dass die Module bei intensiver Nutzung gekühlt werden müssen, da die innerhalb des Gehäuses verbauten Motoren zu Eigenerwärmung und Überhitzung und somit schließlich zu Ausfallzeiten führen. Außerdem sind die wartungsrelevanten Bereiche der Rotations-Hub-Module, bedingt durch ihre Anordnung innerhalb ihrer Gehäuse, schwer zugänglich. Des Weiteren erzeugen die verwendeten Motoren starke Magnetfelder, die sich negativ auf die Gesundheit der Menschen auswirken können, insbesondere bei Menschen mit Herzschrittmachern Funktionsstörungen verursachen können.

Des Weiteren entsteht bei einer Verwendung von Linearmotoren in vertikalen Einbaulage ein weiterer Nachteil dadurch, dass bei plötzlicher Stromlosigkeit die Aktuatorwelle ins Leere fallen würde. Um das zu vermeiden, ist eine separate Bremse notwendig, wodurch ein zusätzlicher Fertigungsaufwand bedingt ist und das Gewicht des Rotations-Hub-Moduls erhöht wird.

Außerdem ist durch die Anordnung der beiden Motoren hintereinander das Rotations-Hub-Modul in der Gesamtlänge in Bezug auf die erreichbare Hublänge verhältnismäßig groß.

Eine Veröffentlichung von Michael Firnkes et al vom 01. Juni 2015 mit dem Titel "Blog Boosting: Content Marketing Design SEO" offenbart eine Hub-Schwenk-Einheit der Firma SPN Schwaben Präzision Fritz Hopf GmbH (Hub-Schwenk-Einheit HSE 12-16-20), welche die zuvor genannten Nachteile behebt. Die Hubbewegung erfolgt durch eine Umwandlung der Rotationsbewegung des erstens Motors in eine lineare Bewegung. Die lineare Bewegung wird durch eine Traverse an die Abtriebswelle übertragen. Die Rotationsbewegung eines zweiten Motors wird durch ein Planetengetriebe untersetzt und über ein Stirnradgetriebe mit Zwischenrad an die Abtriebswelle übertragen. Zusätzlich weist das Gehäuse ein Ober- und ein Unterteil auf. Diese beiden Teile sind durch einen Klemmring verbunden. Somit kann das Ober- und das Unterteil gegeneinander verdreht werden. An dem Unterteil ist der Motor für die lineare Bewegung und an dem Oberteil der Motor für die rotative Bewegung angeordnet. Durch die Möglichkeit des stufenlosen Verdrehens können die beiden Motoren in unterschiedliche Stellungen zueinander angeordnet werden, wodurch das Modul an den Bauraum angepasst werden kann.

Das Modul der Firma SPN Schwaben Präzision Fritz Hopf GmbH sowie die zuvor genannten Veröffentlichung weisen den Nachteil einer schlechten Versorgung der adaptiven Greifsysteme auf. Eine Versorgung der Systeme mit elektrischen Signalen und Medien, wie zum Beispiel Druckluft, außerhalb der Rotations-Hub-Module hat den Nachteil, dass dies zu einem Verdrehen der zugeführten Leitungen führen kann, wenn die adaptiven Greifsysteme nicht wieder auf ihre Ursprüngliche Position zurückgedreht werden. Eine technische Umsetzung der erstgenannten Veröffentlichung EP 2 733 830 A1 offenbart zwar eine Aktuatorwelle mit einer Durchgangsbohrung, diese lässt jedoch nur eine Versorgung des Arbeitselements mit elektrischen Signalen zu.

Der Erfindung liegt daher die Aufgabe zugrunde, ein Hub-Rotations-Modul zu entwickeln, welches auch bei voll ausgefahrener Aktuatorwelle präzise und stabil arbeitet und eine kompakte Bauweise besitzt und gleichzeitig eine sehr gute Versorgung und Ansteuerung des Arbeitselementes bietet.

### Die Erfindung und ihre Vorteile

Das erfindungsgemäße Rotations-Hub-Modul mit den Merkmalen des Anspruchs 1 hat gegenüber den herkömmlichen Rotations-Hub-Modulen den Vorteil, dass es in seiner Gesamtlänge kurz und kompakt ausgeführt ist und dabei trotzdem lange Hubwege bei gleichzeitig präziser und stabiler Arbeitsweise einschließlich sicherer Führung der Aktuatorwelle und zudem eine gute mechanische Manipulation ermöglicht.

Dies wird dadurch erreicht, dass die Aktuatorwelle hohl ausgeführt ist und dass eine Kolbenstange koaxial und axial verschiebbar durch die Aktuatorwelle hindurchgeführt ist, wobei die Kolbenstange an ihrem aus dem Gehäuse herausragendem Ende mit dem an der Aktuatorwelle angeordnetem Arbeitselement und an ihrem gegenüberliegenden Ende mit einem Wirkzylinder in Wirkverbindung steht und eine Kraft von dem Wirkzylinder auf das Arbeitselement am gegenüberliegenden Ende überträgt. Dieser Wirkzylinder kann ein Pneumatik-, Hydraulik- oder elektromechanischen Zylinder sein. Somit müssen keine krafterzeugenden Zylinder am Arbeitselement selbst angeordnet sein. Dadurch kann das Arbeitselement leichter ausgebildet sein, so dass infolge dessen auch nur geringere Massen durch das Rotations-Hub-Modul bewegt werden müssen.

In einer vorteilhaften Ausgestaltung der Erfindung werden als Drehmotoren AC-Servomotoren verwendet, welche den Vorteil bieten, dass sie wartungsfrei sind und im Vergleich zu Linearmotoren kleinere Magnetfelder erzeugen. Bei AC Servomotoren besteht auch nicht mehr die Gefahr, dass bei plötzlicher Stromlosigkeit die Aktuatorwelle von vertikal angeordneten Motoren ins Leer fällt. Dadurch wird keine zusätzliche Bremse, die bei Stromlosigkeit das "Fallen" der Aktuatorwelle verhindert, wodurch Gewicht eingespart und das gesamte Rotations-Hub-Modul noch kompakter gestaltet werden kann.

Nach einer vorteilhaften Ausgestaltung der Erfindung sind die Motoren außerhalb des Gehäuses angeordnet, das den Vorteil bietet, dass kein Wärmestau entsteht und auf Kühlsysteme verzichtet werden kann. Zusätzlich sind durch die Anordnung der Motoren außerhalb des Gehäuses die wartungsrelevanten Bereiche, wie Getriebe und Antriebsriemenspannung, leicht zugänglich und können schnell ausgetauscht werden.

In einer zusätzlichen vorteilhaften Ausgestaltung der Erfindung sind die Motoren nebeneinander angeordnet, wodurch das Rotations-Hub-Modul noch kompakter gefertigt werden kann und alle zur Übertragung der Drehbewegungen notwendigen Bauteile innerhalb eines Getriebegehäuses angeordnet werden können.

In einer anderweitig vorteilhaften Ausgestaltung der Erfindung ist die Kolbenstange ebenfalls hohl ausgeführt. Dadurch können, wie zuvor bei der hohlen Aktuatorwelle beschrieben, durch die hohle Kolbenstange Signal- und Medienleitungen zum Arbeitselement geführt werden. Zudem hat die zentrale Durchführung der Medienleitungen den Vorteil, dass keine Leitungen außerhalb des Gehäuses zum Arbeitselement geführt werden müssen.

Nach einer zusätzlichen vorteilhaften Ausgestaltung der Erfindung befindet sich in axialer Verlängerung der Aktuatorwelle bzw. der Kolbenstange hinter dem Wirkzylinder ein Drehverteiler, der bei einer mehrmaligen Rotation um die eigene Achse ein Verdrehen der Signal- bzw. Medienleitungen verhindert. Besonders wichtig ist dies bei Schraubverschließern, da bei diesen das Arbeitselement immer nur in eine Drehrichtung gedreht wird, das heißt zwischen zwei Schraubvorgängen lediglich ein neuer Deckel aufgenommen wird. Da die Aktuatorwelle nicht vor jedem neuen Arbeitsschritt auf die Ausgangsposition zurückgedreht werden muss, kann somit die Taktzeit verkürzt und der Verschleiß reduziert werden.

In einer zusätzlichen vorteilhaften Ausgestaltung der Erfindung werden zur Übertragung der Drehbewegung der Drehmotoren auf die Aktuatorwelle sowie die Hub-Gewinde-Spindel flexible Übertragungsmittel, wie zum Beispiel Ketten oder Riemen genutzt. Für eine Variation der Drehzahl des Drehmotors, können zusätzlich noch Getriebe zwischen den Drehmotoren und der Aktuatorwelle bzw. der Hub-Gewinde-Spindel angeordnet werden.

Nach einer ebenfalls vorteilhaften Ausgestaltung der Erfindung wirkt der Mitnehmer, der die Mutter mit der Aktuatorwelle verbindet, koaxial auf die Aktuatorwelle. Dadurch wird erreicht, dass die Aktuatorwelle nicht durch den Druck der Mutter zur Seite gedrückt wird, sondern immer in axialer Richtung belastet wird.

### Zeichnung

Der Gegenstand der Erfindung ist in den Zeichnungen am Beispiel eines Rotations-Hub-Moduls näher erläutert. Es zeigen:
- Fig. 1: eine Seitenansicht eines erfindungsgemäßen Rotations-Hub-Moduls in vertikaler Lage,
- Fig. 2: eine Schnittdarstellung entlang der Linie A-A aus Fig. 1.

### Beschreibung des Ausführungsbeispiels

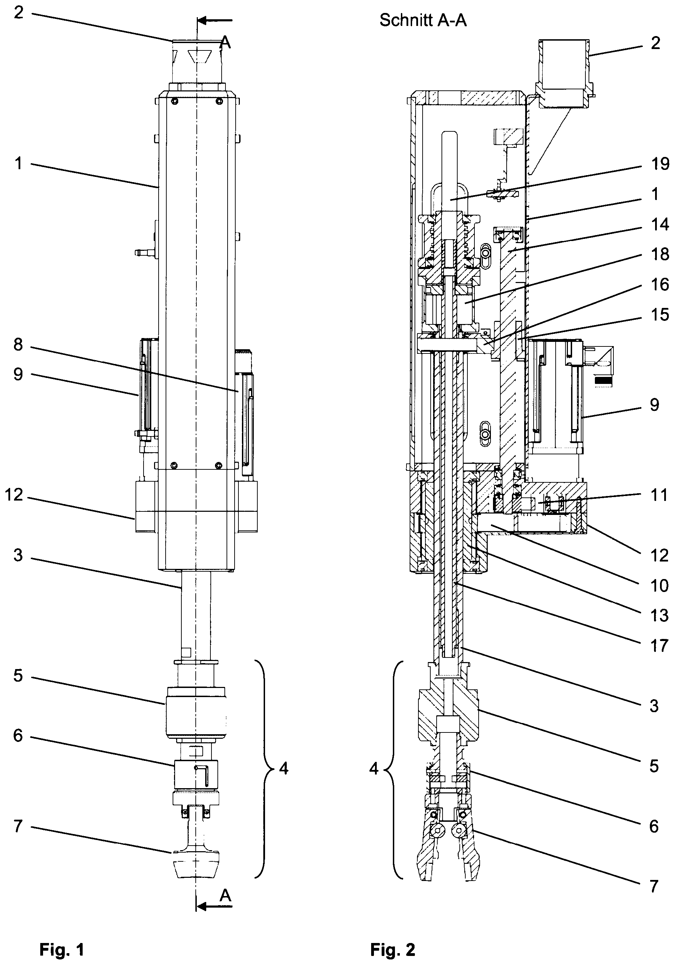

Fig. 1 zeigt ein Rotations-Hub-Modul in vertikaler Einbaulage. Das Rotations-Hub-Modul besteht aus einem Gehäuse 1, an dessen oberen Ende eine Kabeldurchführung 2 angeordnet ist und aus dessen gegenüberliegendem unterem Ende eine in dem Gehäuse 1 drehbar und axial bewegbare Aktuatorwelle 3 herausragt, an der ein Arbeitselement 4 befestigt ist. Dieses Arbeitselement 4 besteht wiederum aus einer Drehmomentenkupplung 5, einer Schnellkupplung 6 und einem Greifer 7. In Fig. 2 ist eine Schnittdarstellung A-A aus Fig. 1 zu sehen. Des Weiteren besteht das Rotations-Hub-Modul aus zwei AC-Servomotoren 8 und 9, die im vorliegendem Beispiel über flexible Übertragungsmittel 10 und 11 mit jeweils einem innerhalb eines Getriebegehäuses 12 angeordneten Getriebe (in Fig. 1 und 2 nicht dargestellt) in Wirkverbindung stehen.

Die Aktuatorwelle 3 ist koaxial in einer Buchse 13 gelagert, die über das flexible Übertragungsmittel 10 mit dem ersten AC-Servomotor 8 in Wirkverbindung steht. Für unterschiedliche Übersetzungen zwischen dem AC-Servomotor 8 und der Buchse 13 kann ein zusätzliches Getriebe vorgesehen sein. Ähnlich dem Prinzip einer Linearkugelbuchse sind in der inneren Mantelfläche der Buchse 13 sowie in der äußeren Mantelfläche der Aktuatorwelle 3 Längsnuten vorgesehen, in denen sich Kugeln befinden, die zur Übertragung der Rotation der Buchse 13 auf die Aktuatorwelle 3 zwischen beiden einen Formschluss herstellen. Gleichzeitig ermöglicht dieser Formschluss aber eine freie axiale Beweglichkeit der Aktuatorwelle 3 in der Buchse 13. Somit können Drehwinkel und Drehzahl der Aktuatorwelle 3 bei deren freier Längsverschiebbarkeit in dem Gehäuse 1 über die Steuerung des ersten AC-Servomotors 8 bestimmt werden.

Der zweite der beiden AC-Servomotoren 9 treibt über das flexible Übertragungsmittel 11 und das Getriebe eine Hub-Gewinde-Spindel 14 an. Die Übertragung kann auch ohne Getriebe direkt vom zweiten AC-Servomotor 9 über das flexible Übertragungsmittel 11 auf die Hub-Gewinde-Spindel 14 erfolgen. Diese Hub-Gewinde-Spindel 14 ist innerhalb des Gehäuses 1 drehbar, jedoch axial fest gelagert. Auf dieser Hub-Gewinde-Spindel 14 befindet sich eine mit dem Gewinde der Hub-Gewinde-Spindel 14 in Wirkverbindung stehende Mutter 15. Diese Mutter 15 ist über einen Mitnehmer 16 mit der Aktuatorwelle 3 in der Art verbunden, dass die Aktuatorwelle 3 jede axiale Bewegung der Mutter 15 identisch ausführt, dabei jedoch frei um die eigene Achse drehbar ist. Dadurch kann der Hubweg der Aktuatorwelle 3 über einen definierten Drehwinkel des zweiten AC-Servomotors 9 bestimmt werden. Zusätzlich kann der Hubweg der Aktuatorwelle 3 über die Steigung des Gewindes der Hub-Gewinde-Spindel 14 beeinflusst werden.

In dem vorliegenden Ausführungsbeispiel ist die Aktuatorwelle 3 als eine Hohlwelle ausgeführt. Dadurch wird ermöglicht, eine Kolbenstange 17 koaxial in der Aktuatorwelle 3 anzuordnen. An dem Ende der Kolbenstange 17, welches sich im Gehäuse 1 befindet, ist ein Wirkzylinder 18 angeordnet. Die Kolbenstange 17 reicht von dem Arbeitselement 4 außerhalb des Gehäuses 1 durch die Aktuatorwelle 3 hindurch bis zu dem Wirkzylinder 18. Über diesen Wirkzylinder 18 kann eine Kraft über die Kolbenstange 17 auf das Arbeitselement 4 übertragen werden. Zusätzlich ist die Kolbenstange 17 ebenfalls hohl ausgeführt. Somit ist es möglich, Signal- und Medienleitungen durch die Kolbenstage 17 zum Arbeitselement 4 hindurch zu führen.

Des Weiteren weist das Rotations-Hub-Modul an dem Ende der Kolbenstange 17 und des Wirkzylinders 18 einen Drehverteiler 19 auf, der bei einer mehrmaligen Rotation der Aktuatorwelle 3 um die eigene Achse ein Verdrehen der Signal- und Medienleitungen verhindert.

Alle hier dargestellten Merkmale können sowohl einzeln als auch in beliebiger Kombination miteinander erfindungswesentlich sein.

### Bezugszahlenliste

- 1: Gehäuse
- 2: Kabeldurchführung
- 3: Aktuatorwelle
- 4: Arbeitselement
- 5: Drehmomentkupplung
- 6: Schnellkupplung
- 7: Greifer
- 8: erster AC-Servomotor
- 9: zweiter AC-Servomotor
- 10: flexibles Übertragungsmittel des ersten Motors
- 11: flexibles Übertragungsmittel des zweiten Motors
- 12: Getriebegehäuse
- 13: Buchse
- 14: Hub-Gewinde-Spindel
- 15: Mutter
- 16: Mitnehmer
- 17: Kolbenstange
- 18: Wirkzylinder
- 19: Drehverteiler

## Patentansprüche

1. Rotations-Hub-Modul, bestehend aus einem Gehäuse (1), zwei Drehmotoren (8, 9), einer Aktuatorwelle (3), welche dreh- und axial verschiebbar in dem Gehäuse (1) gelagert ist und die mit ihrem aus dem Gehäuse (1) herausragendem Ende mit einem Arbeitselement (4) in Wirkverbindung steht, und einer in dem Gehäuse (1) und parallel zur Aktuatorwelle (3) angeordneten Gewinde-Hub-Spindel (14) mit einer mit dem Gewinde der Hub-Gewinde-Spindel (14) in Wirkverbindung stehenden Mutter (15), wobei ein erster Drehmotor (8) seine Drehbewegung über eine Buchse (13), durch die die Aktuatorwelle (3) koaxial und axial verschiebbar hindurchgeführt ist, auf die Aktuatorwelle (3) überträgt und ein zweiter Drehmotor (9) seine Drehbewegung auf die Gewinde-Hub-Spindel (14) überträgt und so die auf der Gewinde-Hub-Spindel (14) sitzende Mutter (15) in eine Linearbewegung versetzt, wobei die Mutter (15) durch einen Mitnehmer (16) mit der Aktuatorwelle (3) in Wirkverbindung steht und ihre Linearbewegung auf die Aktuatorwelle (3) überträgt,
**dadurch gekennzeichnet,**
**dass** die Aktuatorwelle (3) hohl ausgeführt ist und dass eine Kolbenstange (17) koaxial und axial verschiebbar durch die Aktuatorwelle (3) hindurchgeführt ist, wobei die Kolbenstange (17) an ihrem aus dem Gehäuse (1) herausragendem Ende mit dem an der Aktuatorwelle (3) angeordnetem Arbeitselement (4) und an ihrem gegenüberliegenden Ende mit einem Wirkzylinder (18) in Wirkverbindung steht und eine Kraft von dem Wirkzylinder (18) auf das Arbeitselement (4) am gegenüberliegenden Ende überträgt.

2. Rotations-Hub-Modul nach Anspruch 1,
**dadurch gekennzeichnet,**
**dass** die Drehmotoren (8, 9) AC-Servomotoren sind.

3. Rotations-Hub-Modul nach Anspruch 1 oder 2,
**dadurch gekennzeichnet,**
**dass** die Drehmotoren (8, 9) außerhalb des Gehäuses (1) angeordnet sind.

4. Rotations-Hub-Modul nach Anspruch 1, 2 oder 3,
**dadurch gekennzeichnet,**
**dass** die Drehmotoren (8, 9) nebeneinander angeordnet sind.

5. Rotations-Hub-Modul nach einem der Ansprüche 1 bis 4,
**dadurch gekennzeichnet,**
**dass** die Kolbenstange (17) hohl ausgeführt ist.

6. Rotations-Hub-Modul nach Anspruch 5,
**dadurch gekennzeichnet,**
**dass** durch die Kolbenstange (17) elektrische Signalleitungen und/oder Medienleitungen hindurchgeführt sind.

7. Rotations-Hub-Modul nach einem der Ansprüche 1 bis 6,
**dadurch gekennzeichnet,**
**dass** in axialer Verlängerung der Aktuatorwelle (3) an dem dem Arbeitselement (4) gegenüberliegendem Ende ein Drehverteiler (19) angeordnet ist.

8. Rotations-Hub-Modul nach einem der Ansprüche 1 bis 7,
**dadurch gekennzeichnet,**
**dass** die Drehbewegung der Drehmotoren (8, 9) über Getriebe und/oder flexible Übertragungsmittel (10, 11) auf die Aktuatorwelle (3) und/oder die Gewinde-Hub-Spindel (14) übertragen wird.

9. Rotations-Hub-Modul nach einem der Ansprüche 1 bis 8,
**dadurch gekennzeichnet,**
**dass** der Mitnehmer (16) als ein koaxial auf die Aktuatorwelle (3) wirkendes Druckelement ausgeführt ist.

## Claims

1. A rotation stroke module consisting of a housing (1), two rotary motors (8, 9), an actuator shaft (3), which is mounted in the housing (1) so as to be rotatably and axially movable and which, with its end protruding out of the housing (1), is in operative connection with a work element (4), and a thread stroke spindle (14) arranged in the housing (1) and parallel to the actuator shaft (3) with a nut (15) operatively connected to the thread of the stroke thread spindle (14), wherein a first rotary motor (8) transfers its rotary motion to the actuator shaft (3) via a bushing (13), through which the actuator shaft (3) is passed in a coaxially and axially movable manner, and a second rotary motor (9) transfers its rotary motion onto the thread stroke spindle (14) and thereby causes the nut (15) on the thread stroke spindle (14) to move in a linear manner, wherein the nut (15) is in operative connection with the actuator shaft (3) via a driver (16) and transfers its linear movement onto the actuator shaft (3),
**characterised in that**
the actuator shaft (3) is configured as a hollow body and a piston rod (17) is passed through the actuator shaft (3) in a coaxially and axially movable manner, wherein the piston rod (17), at its end protruding from the housing (1), is in operative connection with the work element (4) arranged on the actuator shaft (3) and, at its opposite end, is in operative connection with an operating cylinder (18) and transfer a force from the operating cylinder (18) onto the work element (4) at the opposite end.

2. The rotation stroke module according to claim 1,
**characterised in that**
the rotary motors (8, 9) are AC servomotors.

3. The rotation stroke module according to claim 1 or 2,
**characterised in that**
the rotary motors (8, 9) are arranged outside the housing (1).

4. The rotation stroke module according to claim 1, 2 or 3,
**characterised in that**
the rotary motors (8, 9) are arranged adjacent to each other.

5. The rotation stroke module according to one of claims 1 to 4,
**characterised in that**
the piston rod (17) is configured as a hollow body.

6. The rotation stroke module according to claim 5,
**characterised in that**
electrical signal lines and/or media lines are passed through the piston rod (17).

7. The rotation stroke module according to one of claims 1 to 6,
**characterised in that**
a rotary distributor (19) is arranged at the end opposite the work element (4) as an axial extension of the actuator shaft (3).

8. The rotation stroke module according to one of claims 1 to 7,
**characterised in that**
the rotary motion of the rotary motors (8, 9) is transferred onto the actuator shaft (3) and/or the thread stroke spindle (14) via gears and/or flexible transfer means (10, 11).

9. The rotation stroke module according to one of claims 1 to 8,
**characterised in that**
the driver (16) is configured as a pressure element acting on the actuator shaft (3) in a coaxial manner.

## Revendications

1. Module de mise en rotation/en levage, constitué d'un carter (1), de deux rotateurs (8, 9), d'un arbre d'actionneur (3), lequel est logé de manière à pouvoir se déplacer en rotation et en direction axiale dans le carter (1) et lequel par son extrémité saillant hors du carter (1) est en liaison active avec un élément de travail (4) et d'une broche de levage filetée (14) placée dans le carter (1) et à la parallèle de l'arbre d'actionneur (3), pourvue d'un écrou (15) qui est en liaison active avec le filetage de la broche de levage filetée (14), un premier rotateur (8) transmettant son mouvement de rotation sur l'arbre d'actionneur (3) par l'intermédiaire d'une douille (13), à travers laquelle l'arbre d'actionneur (3) passe en étant déplaçable de manière coaxiale et axiale et un deuxième rotateur (9) transmettant son mouvement de rotation sur la broche de levage filetée (14) et amenant ainsi l'écrou (15) assis sur la broche de levage filetée (14) dans un mouvement linéaire, l'écrou (15) étant en liaison active avec l'arbre d'actionneur (3) par l'intermédiaire d'un entraîneur (16) et transmettant son mouvement linéaire sur l'arbre d'actionneur (3), **caractérisé en ce que**
l'arbre d'actionneur (3) est réalisé en étant creux et **en ce qu'**une tige de piston (17) passe à travers l'arbre d'actionneur (3) en étant déplaçable de manière coaxiale et axiale, par son extrémité saillant hors du carter (1), la tige de piston (17) étant en liaison active avec l'élément de travail (4) placé sur l'arbre d'actionneur (3) et par son extrémité opposée, étant en liaison active avec un vérin d'actionnement (18) et transmettant une force du vérin d'actionnement (18) sur l'élément de travail (4) sur l'extrémité opposée.

2. Module de mise en rotation/en levage selon la revendication 1,
**caractérisé en ce que**
les rotateurs (8, 9) sont des servomoteurs AC.

3. Module de mise en rotation/en levage selon la revendication 1 ou 2,
**caractérisé en ce que**
les rotateurs (8, 9) sont placés à l'extérieur du carter (1).

4. Module de mise en rotation/en levage selon la revendication 1, 2 ou 3,
**caractérisé en ce que**
les rotateurs (8, 9) sont placés côte à côte.

5. Module de mise en rotation/en levage selon l'une quelconque des revendications 1 à 4,
**caractérisé en ce que**
la tige de piston (17) est réalisée en étant creuse.

6. Module de mise en rotation/en levage selon la revendication 5,
**caractérisé en ce que**
des lignes de signaux électriques et/ou des conduits de fluide passent à travers la tige de piston (17).

7. Module de mise en rotation/en levage selon l'une quelconque des revendications 1 à 6,
**caractérisé en ce que**
dans le prolongement axial de l'arbre d'actionneur (3), sur l'extrémité opposée à l'élément de travail (4) est placé un distributeur rotatif (19).

8. Module de mise en rotation/en levage selon l'une quelconque des revendications 1 à 7,
**caractérisé en ce que**
le mouvement de rotation des rotateurs (8, 9) est transmis par l'intermédiaire d'un engrenage et/ou d'un moyen de transmission (10, 11) flexible sur l'arbre d'actionneur (3) et/ou sur la broche de levage filetée (14) .

9. Module de mise en rotation/en levage selon l'une quelconque des revendications 1 à 8,
**caractérisé en ce que**
l'entraîneur (16) est conçu sous la forme d'un élément de pression agissant de manière coaxiale sur l'arbre d'actionneur (3).
